# EUROPÄISCHE PATENTSCHRIFT

(11) **EP 4 310 443 B1**
(45) Veröffentlichungstag und Bekanntmachung des Hinweises auf die Patenterteilung: **15.01.2025**
(21) Anmeldenummer: 22186151.1
(22) Anmeldetag: 21.07.2022
(51) Int. Cl.: G01B 11/00, G01B 11/02, G01S 7/481, G01S 17/48

(54) **OPTISCHER TRIANGULATIONSTASTER**
OPTICAL TRIANGULATION PROBE
PALPEUR OPTIQUE DE TRIANGULATION

(43) Veröffentlichungstag der Anmeldung: 24.01.2024
(73) Patentinhaber: Leuze electronic GmbH + Co. KG, 73277 Owen/Teck (DE)
(72) Erfinder: Butzbach, Markus, 73734 Esslingen (DE); Fauth, Siegfried, 73230 Kirchheim/Teck (DE)
(74) Vertreter: Ruckh, Rainer Gerhard

(56) Entgegenhaltungen:
- EP-B1- 1 916 545
- DE-B3- 102015 119 668
- DE-B4- 102005 033 349
- DE-B4- 19 907 547
- DE-U1- 202009 002 340
- US-B2- 10 634 785

## Beschreibung

Die Erfindung betrifft einen optischen Triangulationstaster gemäß dem Oberbegriff des Anspruchs 1.

Derartige optische Triangulationstaster arbeiten nach dem Triangulationsprinzip. Dementsprechend bilden der Sender und die Empfängeranordnung des optischen Triangulationstaster eine Triangulationsanordnung. Bei dieser Triangulationsanordnung sind die Empfänger der Empfängeranordnung in einer Triangulationsrichtung nebeneinander liegend in Abstand zum Sender angeordnet. Die Triangulationsrichtung verläuft quer, vorteilhaft senkrecht zur Strahlachse der vom Sender emittierten Sendelichtstrahlen.

Zur Detektion eines Objekts im Überwachungsbereich treffen die Sendelichtstrahlen des Senders auf dieses Objekt und werden von diesem als Empfangslichtstrahlen zurück zur Empfängeranordnung geführt. Der Auftreffort des Lichtflecks der Empfangslichtstrahlen auf der Empfängeranordnung ist abhängig von der Distanz des Objekts zum optischen Triangulationstaster. Bei geringen Distanzen treffen die Empfangslichtstrahlen vorwiegend auf einen ersten, ein Nahelement bildenden Empfänger der Empfängeranordnung. Bei großen Distanzen treffen die Empfangslichtstrahlen vorwiegend auf den zweiten Empfänger der Empfängeranordnung, der ein Fernelement bildet.

Aus dem Verhältnis der Empfängersignale wird in der Steuer- und Auswerteeinheit ein Objektfeststellungssignal generiert.

Üblicherweise wird die Differenz der Empfangssignale der Empfänger, d.h. des Nah- und Fernelements gebildet, wobei aus dieser Differenz das Objektfeststellungssignal generiert wird. Typischerweise wird die Differenz der Empfangssignale mit einem eine Schaltschwelle bildenden Schwellwert bewertet. Dadurch wird eine Tastweite, d.h. einen Detektionsabstand definiert, der einen Tastbereich begrenzt.

Trifft der Lichtfleck der Empfangslichtstrahlen vorwiegend auf das Nahelement, befindet sich das Objekt innerhalb des Tastbereichs. Trifft der Lichtfleck der Empfangslichtstrahlen vorwiegend auf das Fernelement, befindet sich das Objekt außerhalb des Tastbereichs in einem Hintergrundbereich.

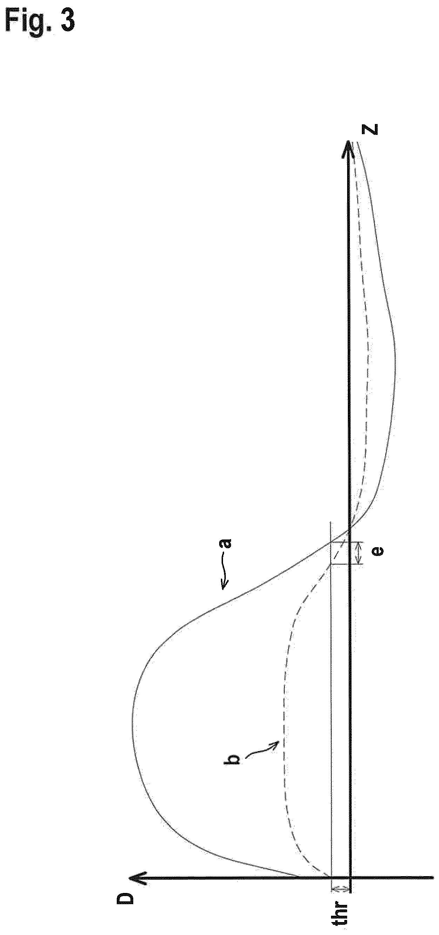

Figur 3 zeigt beispielhaft die Differenzsignale eines optischen Triangulationstasters abhängig vom Objektabstand, wobei die dargestellte Kurve a von der Detektion eines hellen, stark reflektierenden Objekts stammt und die dargestellte Kurve b von einem schwach reflektierenden Objekt stammt.

Zwischen den beiden Kurven liegt bei jedem Abstand der gleiche Faktor, nämlich das Verhältnis der Objektremissionen. Der Nulldurchgang des Differenzsignals liegt bei beiden Kurven bei dem gleichen Abstand. An dieser Stelle liefern, unabhängig von der Gesamtmenge des eingesammelten Lichts, das Nahelement und das Fernelement das gleiche Signal. Werden die Empfangssignale des Nah- und Fernelements gleich verstärkt, sitzt der Lichtfleck der Empfangslichtstrahlen mittig auf der Trennlinie zwischen dem Nah- und Fernelement.

Diese Art der Auswertung hat den großen Vorteil, dass Objekte, die weiter vom optischen Triangulationstaster entfernt liegen, immer einen Lichtfleck mit dem Schwerpunkt auf dem Fernelement erzeugen, das Differenzsignal also immer negativ wird. Somit können Objekte im Hintergrund, unabhängig von der Objektremission, zuverlässig unterdrückt werden, d.h. es erfolgt eine Hintergrundausblendung.

Befindet sich kein Objekt im Überwachungsbereich, trifft also kein Licht auf die Empfänger, ist das ausgewertete Differenzsignal 0. Um ein Objekt im Überwachungsbereich ohne Mehrdeutigkeiten zu erkennen, liegt daher der Schwellwert der für die Generierung des Objektfeststellungssignals verwendet wird in der Regel nicht beim Nullpunkt des Differenzsignals.

Der Schwellwert, d.h. die Schaltschwelle, ist in Figur 3 mit thr bezeichnet.

Durch diese Wahl der Schaltschwelle ergibt sich ein leicht unterschiedlicher Detektionsabstand für helle und dunkle Objekte. Diese Abweichung des Detektionsabstands wird als Schwarz-Weiss-Fehler bezeichnet und ist in Figur 3 mit e bezeichnet.

Im Idealfall ist der Schwarz-Weiss-Fehler möglichst klein, da dann alle Objekte, unabhängig von ihrer Remission, bis zum gleichen Detektionsabstand erkannt werden. Wie aus Figur 3 hervorgeht, ist eine Voraussetzung dafür ein möglichst steiler Verlauf der Abstandskennlinie im Bereich der Schaltschwelle.

Bei Tastern mit Hintergrundausblendung ist es für ein robustes Schaltverhalten mit geringem Schwarz-Weiss-Fehler vorteilhaft, wenn die Lücke zwischen Nah- und Fernelement möglichst klein ist. In diesem Fall ist der Übergang zwischen Nah- und Fernbereich am schärfsten, da die Wanderung des Lichtflecks der Empfangslichtstrahlen vom Nah- auf das Fernelement oder umgekehrt am schnellsten von statten geht. Damit ergibt sich ein robustes Schaltverhalten des optischen Triangulationstasters und ein minimaler Schwarz-Weiss-Fehler.

Als Empfänger werden in der Regel Empfangszeilen mit mehreren Pixeln oder Doppel-Fotodioden verwendet. Bei diesen Bauteilen sind die einzelnen Fotodioden physisch auf dem gleichen Halbleitersubstrat untergebracht und nur elektrisch getrennt. Dadurch sind Abstände zwischen den einzelnen Empfängern von wenigen Mikrometern möglich.

Diese Empfangsbausteine sind aufgrund der komplexeren Halbleiterprozesse bei gleichzeitig geringeren Stückzahlen im Vergleich zu Standard-Fotodioden sehr teuer. Die Bauteile sind weiterhin deutlich größer als Standard-Fotodioden. Dies kann ein Hindernis bei der Miniaturisierung solcher Sensoren sein.

Bei der Verwendung von kostengünstigen Standard-Fotodioden für das Nah- und Fernelement ergibt sich das Problem, dass die Lücke zwischen den Elementen deutlich größer wird als bei den genannten Lösungen nach Stand der Technik. Bei der Nutzung von SMD-Fotodioden kann der Abstand zwischen den Empfängerflächen durch die Abstände zum Gehäuserand auf >1 mm anwachsen. Selbst wenn die Fotodioden direkt auf der Leitplatte kontaktiert werden (Chipon-board Technik) muss mit Abständen zwischen den Dioden von einigen 100 µm gerechnet werden.

Setzt man bei einem solchen System eine Empfangsoptik ein, die das Empfangslicht möglichst scharf in der Empfängerebene abbildet, kann dies zu undefiniertem Schaltverhalten führen, da das Empfangslicht beim Übergang von einem Empfangselement zum anderen vollständig in die Lücke zwischen den Empfangselementen fällt und damit kein definiertes Empfangssignal erzeugt wird.

Um die Lücke zwischen den Empfangsdioden auszugleichen und weiterhin die Funktionalität eines optischen Triangulationstasters mit Hintergrundausblendung zu erhalten, ist es denkbar, den Empfangslichtfleck zu defokussieren und somit in der Empfängerebene so zu vergrößern, dass beim Übergang von Nahzu Fernelement (oder umgekehrt) beide Empfänger von einem Teil des Lichtflecks bestrahlt werden.

Die Vergrößerung des Empfangslichtflecks bei einer Lücke zwischen den Empfängern führt zu einem weniger robusten Schaltverhalten und einem vergrößerten Schwarz-Weiss-Fehler, da der Übergang des Empfangslichtflecks vom Nahzum Fernelement oder umgekehrt deutlich langsamer stattfindet. Außerdem verringert sich die maximale Reichweite des optischen Triangulationstasters, da ein großer Teil des von der Empfangsoptik eingesammelten Lichts in der Lücke zwischen den Empfängern landet und nicht zur Signalerzeugung beiträgt.

In der DE 10 2015 119 668 B3 wird ein optoelektronischer Sensor nach dem Prinzip der Triangulation zur Erfassung eines Objekts in einem Überwachungsbereich mit einem Lichtsender zum Aussenden eines Lichtbündels und einem um einen Basisabstand gegen den Lichtsender versetzt angeordneten ortsauflösenden Lichtempfänger zum Empfangen des von dem Objekt remittierten Lichtbündels angegeben, wobei dem Lichtempfänger eine Empfangsoptik sowie ein optisches Element zwischen Lichtempfänger und Empfangsoptik vorgeordnet ist. Dabei weist das optische Element einen konvergierenden Teilbereich und einen divergierenden Teilbereich auf und ist so angeordnet, dass ein remittiertes Lichtbündel von einem Objekt in einem Nahbereich des Überwachungsbereichs durch den konvergierenden Teilbereich und ein remittiertes Lichtbündel aus einem Fernbereich des Überwachungsbereichs durch den divergierenden Teilbereich fällt.

Die DE 10 2005 033 349 B4 betrifft einen optischen Sensor zur Erfassung von Objekten in einem durch einen Reflektor begrenzten Überwachungsbereich mit wenigstens einem Sendelichtstrahlen emittierenden Sender, wobei die Sendelichtstrahlen bei freiem Überwachungsbereich auf den Reflektor geführt sind, mit zwei Empfangslichtstrahlen empfangenden Empfängern, wobei ein erster Empfänger in einer sendernahen Zone in einem geringeren Abstand zum Sender als der in einer senderfernen Zone zum Sender liegende zweite Empfänger angeordnet ist, und mit einer Auswerteeinheit zur Generierung eines binären Schaltsignals, dessen Schaltzustände angeben, ob sich ein Objekt im Überwachungsbereich befindet oder nicht, wobei die Empfangssignale der Empfänger jeweils mit einem einstellbaren Verstärkungsfaktor so verstärkt werden, dass bei Detektion des Reflektors die verstärkten Empfangssignale U_{E1} des Empfängers in der sendernahen Zone größer sind als die verstärkten Empfangssignale U_{E2} des Empfängers in der senderfernen Zone, und das Schaltsignal den Schaltzustand "Objekt erkannt" einnimmt, wenn entweder U_{E2} > U_{E1} ist oder wenn die Bedingung U_{E1} + U_{E2} < Uₘᵢₙ erfüllt ist, wobei Uₘᵢₙ ein vorgegebener Schwellwert ist, und ansonsten das Schaltsignal den Schaltzustand "freier Überwachungsbereich" einnimmt.

Die DE 20 2009 002 340 U1 betrifft einen Triangulationssensor zum Nachweis von Objekten in einem Überwachungsbereich, mit einer Sendeeinheit zum Aussenden von Sendelicht in den Überwachungsbereich, mit einer Detektoreinheit zum Nachweis von von Objekten im Überwachungsbereich zurückgestrahltem Detektionslicht, wobei die Detektoreinheit mindestens ein Nahelement, mindestens ein Fernelement und einen Differenzverstärker aufweist zum Verstärken einer Differenz zwischen einem Nachweissignal des Nahelements und einem Nachweissignal des Fernelements und zum Ausgeben eines Differenzsignals, und mit einer Steuer- und Auswerteeinheit zum Ansteuern der Sendeeinheit, zum Auswerten des Differenzsignals und zum Abgeben von Schaltsignalen nach außen. Die Detektoreinheit weist einen separaten Verstärker zum separaten Verstärken des Nachweissignals des Nahelements auf. Die Steuer- und Auswerteeinheit ist eingerichtet zum Auswerten des Differenzsignals gemeinsam mit einem Ausgangssignal des separaten Verstärkers und zum Generieren eines Schaltsignals "Objekt erkannt" auf Grundlage dieser Auswertung.

Die US 10 634 785 B2 betrifft einen optoelektronischen Sensor zur Erfassung von Objektinformationen aus einem Überwachungsbereich mit einem Lichtempfänger, einer dem Lichtempfänger zugeordneten Empfangsoptik zum Erzeugen eines Lichtflecks auf dem Lichtempfänger und einer Auswertungseinheit zum Erzeugen der Objektinformationen aus einem Empfangssignal des Lichtempfängers, wobei eine Manipulationseinheit vorgesehen ist, um Empfangsoptik, Lichtempfänger und/oder Elemente der Empfangsoptik so zu variieren, dass sich der Anteil des Lichtflecks ändert, der aus den Lichtempfängern trifft. Die Manipulationseinheit ist für eine gezielte Dejustage ausgebildet, die eine Änderung in Lage, Größe und/oder Geometrie des Lichtflecks bewirkt, damit über eine Änderung der Lage der Lichtfleck zu einem gewissen Anteil den Lichtempfänger trifft und zu einem übrigen Anteil nicht, wobei über eine Änderung der Größe für ein mehr oder weniger ausgeprägtes Überstrahlen des Lichtempfängers gesorgt wird und/oder durch eine Geometrieänderung der Lichtfleck auch bei gleichem Flächeninhalt nicht mehr auf den Lichtempfänger passt.

Die EP 1 916 545 B1 betrifft einen optoelektronischen Sensor mit einer Strahlungsquelle zum Aussenden von Licht in einen Überwachungsbereich und mit einem Detektor zum Nachweis von von einem nachzuweisenden Zielobjekt und/oder einem Reflektor reflektiertem und/oder gestreutem Licht, wobei der Detektor eine Mehrzahl von Detektorsegmenten aufweist, durch deren Gesamtheit eine Detektorgrundfläche gebildet ist. Der Detektor ist in einer x-Richtung und in einer quer dazu verlaufenden y-Richtung segmentiert, wobei die Detektorsegmente symmetrisch bezüglich einer in x-Richtung verlaufenden Mittenachse des Detektors gebildet sind. Der Detektor weist den Detektorsegmenten zugeordnete Schaltelemente auf, mit welchen die Detektorsegmente zu einer aktiven Fläche zusammengeschaltet oder von der aktiven Fläche weggeschaltet werden können. Eine Position und zweidimensionale Form der aktiven Fläche innerhalb der Detektorgrundfläche ist variabel einstellbar. Vom Detektor ist ein über die aktive Fläche integriertes Nachweissignal ausgebbar. Die Detektorsegmente, die einander bezüglich der Mittenachse des Detektors symmetrisch entsprechen, sind jeweils paarweise zusammenschaltbar, wobei eine Segmenthöhe in y-Richtung der Detektorsegmente ist mit zunehmendem Abstand zu der Mittenachse zunehmend größer.

Die DE 199 07 547 B4 betrifft eine optoelektronische Vorrichtung zum Erfassen von Objekten in einem Überwachungsbereich mit einem Sendelichtstrahlen emittierenden Sender und einem Empfangslichtstrahlen empfangenden Empfangselement, welches ein Nahelement und ein Fernelement aufweist, wobei die vom Objekt reflektierten Empfangslichtstrahlen mit zunehmendem Objektabstand zunächst auf das Nahelement und dann auf das Fernelement treffen, und wobei in einer Auswerteeinheit in Abhängigkeit der Empfangssignale an den Ausgängen des Nah- und Fernelements ein binäres Schaltsignal generiert wird. Das aus dem Nahelement und dem Fernelement bestehende Empfangselement wird aus einer Anzahl von einzelnen Segmenten aufgebaut, die erst mittels der Auswerteeinheit ausgewählt und aufgrund dieser Auswahl einesteils zum Nahelement und der verbleibende Teil zum Fernelement zusammengeschaltet werden.

Der Erfindung liegt die Aufgabe zugrunde, einen optischen Triangulationstaster mit hoher Funktionalität bei gleichzeitiger Verwendung günstiger Standardkomponenten bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Der erfindungsgemäße optische Triangulationstaster dient zur Detektion von Objekten in einem Überwachungsbereich und umfasst einen Sendelichtstrahlen emittierenden Sender und eine Empfängeranordnung mit mindestens zwei Empfängern, die in einer Triangulationsrichtung in Abstand zum Sender nebeneinander liegend angeordnet sind. Sendelichtstrahlen des Senders werden an einem Objekt im Überwachungsbereich reflektiert und als Empfangslichtstrahlen zur Empfängeranordnung geführt. Der optische Triangulationstaster umfasst eine Steuer- und Auswerteeinheit, in welcher abhängig von Empfängersignalen der Empfänger ein Objektfeststellungssignal generiert wird. Zwischen den Empfängern ist eine Lücke vorhanden. Der Empfängeranordnung ist eine Empfangsoptik vorgeordnet, mittels derer die Empfangslichtstrahlen in zwei Empfangslichtbündel aufgeteilt werden, wobei der Abstand der Empfangslichtbündel an die Größe der Lücke angepasst ist.

Mit dem erfindungsgemäßen optischen Triangulationstaster wird eine zuverlässige, sichere Objektdetektion unabhängig von der Remission der zu detektierenden Objekte ermöglicht, d.h. es tritt nur ein geringer Schwarz-Weiss-Fehler bei den Objektdetektionen auf.

Dies wird erfindungsgemäß dadurch erreicht, dass die wenigstens zwei Empfänger der Empfängeranordnung zueinander ortsfest so im optischen Triangulationstaster angeordnet sind, dass eine definierte Lücke zwischen diesen vorhanden ist. Erfindungsgemäß ist eine hierzu angepasste Empfangsoptik vorgesehen, die von einem Objekt zurückreflektierte Empfangslichtstrahlen in zwei Empfangslichtbündel aufteilt, deren Abstand an die Größe der Lücke zwischen den beiden Empfängern angepasst ist.

Vorteilhaft entspricht der Abstand der Empfangslichtbündel am Ort der Empfängeranordnung zumindest näherungsweise der Größe der Lücke.

Dadurch ist sichergestellt, dass bei beliebigen Objektdistanzen stets der Lichtfleck wenigstens eines Empfangslichtbündels auf mindestens einen Empfänger trifft, was eine wesentliche Voraussetzung für einen geringen Schwarz-Weiss-Fehler ist.

Zudem kann durch die an die Empfängeranordnung angepasste Empfangsoptik erreicht werden, dass die Lichtflecke der Empfangslichtbündel klein gewählt werden können, wodurch der Schwarz-Weiss-Fehler des optischen Triangulationstasters weiterhin gering gehalten wird.

Ein weiterer wesentlicher Vorteil des erfindungsgemäßen optischen Triangulationstasters besteht darin, dass die Empfänger so angeordnet sein können, dass zwischen diesen eine Lücke vorhanden ist, ohne dass hierdurch eine signifikante Verschlechterung des Schwarz-Weiss-Fehlers auftritt. Dies beruht darauf, dass die Lücke zwischen den Empfängern durch die Empfangsoptik, die die Empfangslichtstrahlen in zwei Empfangslichtbündel aufteilt, größtenteils kompensiert wird.

Die erfindungsgemäße Empfängeranordnung kann dann von Empfängern in Form von Fotodioden gebildet sein, als Standard-Empfangselemente, die kostengünstig erhältlich sind, was zu einer Reduzierung der Herstellkosten des optischen Triangulationstasters beiträgt.

Vorteilhaft sind die Komponenten des optischen Triangulationstasters in einem Gehäuse untergebracht, in welchem eine Leiterplatte vorhanden ist, auf welcher die Empfänger, die als Fotodioden ausgebildet sein können, angeordnet sind.

Vorteilhaft kann die Leiterplatte in einem konventionellen SMD (surface mounted device)-Prozess bestückt werden.

Ein besonders rationeller Fertigungsprozess und kompakter Aufbau des optischen Triangulationstasters ergibt sich, wenn auch der Sender auf der Leiterplatte angeordnet ist.

Der Sender kann von einer Leuchtdiode oder einer Laserdiode gebildet sein.

Gemäß einer konstruktiv vorteilhaften Ausgestaltung ist im Bereich der Lücke zwischen den Empfängern eine Blende vorhanden.

Zweckmäßig kann die Blende Randbereiche der Empfängeranordnung abdecken.

Mit der Blende kann, unabhängig von Montagetoleranzen der Empfänger der Empfängeranordnung, die Lücke zwischen den Empfängern exakt vorgegeben werden.

Gemäß einer vorteilhaften Ausführungsform weist die Empfangsoptik zwei Teillinsen mit unterschiedlichen optischen Achsen auf.

Gemäß einer alternativen Ausführungsform weist die Empfangsoptik gegeneinander verkippte optische Flächen auf.

Weiterhin kann die Empfangsoptik eine Anordnung von Mikrolinsen oder Mikroprismen aufweisen.

Schließlich kann die Empfangsoptik ein diffraktives Element ausbilden.

Der erfindungsgemäße optische Triangulationstaster kann generell mehr als zwei Empfänger aufweisen, wobei immer zwei benachbarte Empfänger durch eine Lücke getrennt sind, wobei vorteilhaft die Lücken zumindest näherungsweise gleich groß sind. Auch für diese Ausführungsformen ist es ausreichend, wenn die Empfangsoptik die Empfangslichtstrahlen in zwei Empfangslichtbündel aufspaltet, deren Abstand an die Größe der Lücke angepasst ist.

Bei dieser Ausführungsform können mehrere Empfänger gemeinsam verschaltet und zu einem Nahelement, auf welches Empfangslicht von einem Objekt in einem Nahbereich geführt wird, verschaltet sein. Ebenso können mehrere Empfänger zu einem Fernelement verschaltet sein.

Gemäß einer vorteilhaften Ausführungsform wird das Objektfeststellungssignal aus einem Verhältnis der Empfangssignale der Empfänger gebildet.

Durch diese Auswertung wird generell eine Objektdetektion innerhalb eines durch eine Tastweite begrenzten Tastbereichs ermöglicht. Zudem wird eine Hintergrundausblendung derart realisiert, dass Objekte in Distanzen größer als die Tastweite nicht detektiert werden.

Beispielsweise wird als Verhältnis der Quotient der Empfangssignale des Nah- und Fernelements gebildet, wobei sowohl das Nahelement als auch das Fernelement aus einem oder mehreren Empfängern bestehen kann.

Alternativ wird das Objektfeststellungssignal aus der Differenz der Empfangssignale der Empfänger gebildet.

Beide Varianten eignen sich insbesondere, wenn die Empfängeranordnung genau zwei Empfänger aufweist.

Vorteilhaft wird die Differenz der Empfangssignale mit einem Schwellwert bewertet.

Der Schwellwert definiert die Tastweite, die den Tastbereich, innerhalb dessen Objekte erfasst werden, begrenzt und von einem Hintergrundbereich trennt.

Durch die erfindungsgemäße Aufteilung der Empfangslichtstrahlen in zwei Empfangslichtbündel mittels der Empfangsoptik und durch die Anpassung des Abstands der Empfangslichtbündel an die Lücke zwischen den Empfängern wird trotz der Lücke eine hohe Steilheit des Differenzsignals in den an den Nulldurchgang anschließenden Bereich erhalten, wodurch der Schwarz-Weiß-Fehler des optischen Triangulationstasters reduziert wird.

Die Erfindung wird im Folgenden anhand der Zeichnungen erläutert: Es zeigen:
- Figur 1:: Schematische Darstellung eines aus dem Stand der Technik bekannten optischen Triangulationstasters bei einem Objekt in einem Nahbereich.
- Figur 2:: Anordnung gemäß Figur 1 bei einem Objekt in einem Fernbereich.
- Figur 3:: Abstandsabhängigkeit des Differenzsignals der Empfangselemente des optischen Triangulationstasters gemäß den Figuren 1 und 2 für zwei Objekte mit unterschiedlichen Remissionen.
- Figur 4:: Erstes Ausführungsbeispiel des erfindungsgemäßen optischen Triangulationstasters.
- Figur 5:: Zweites Ausführungsbeispiel des erfindungsgemäßen optischen Triangulationstasters.
- Figur 6:: Lichtfleckverteilung zweier Empfangslichtbündel auf der Empfängeranordnung des optischen Triangulationstasters gemäß Figur 4 oder 5.
- Figur 7:: Variante der Ausführungsform gemäß Figur 4.

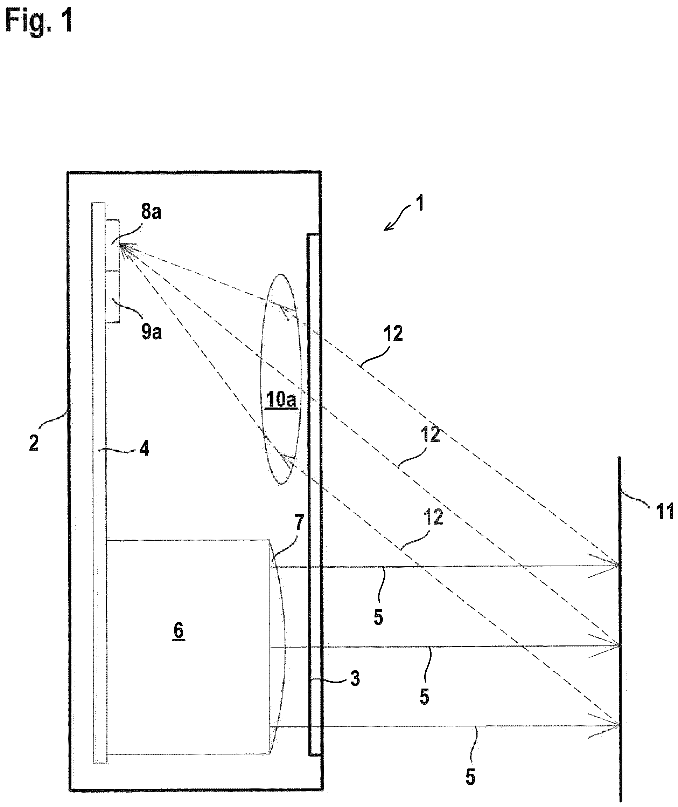

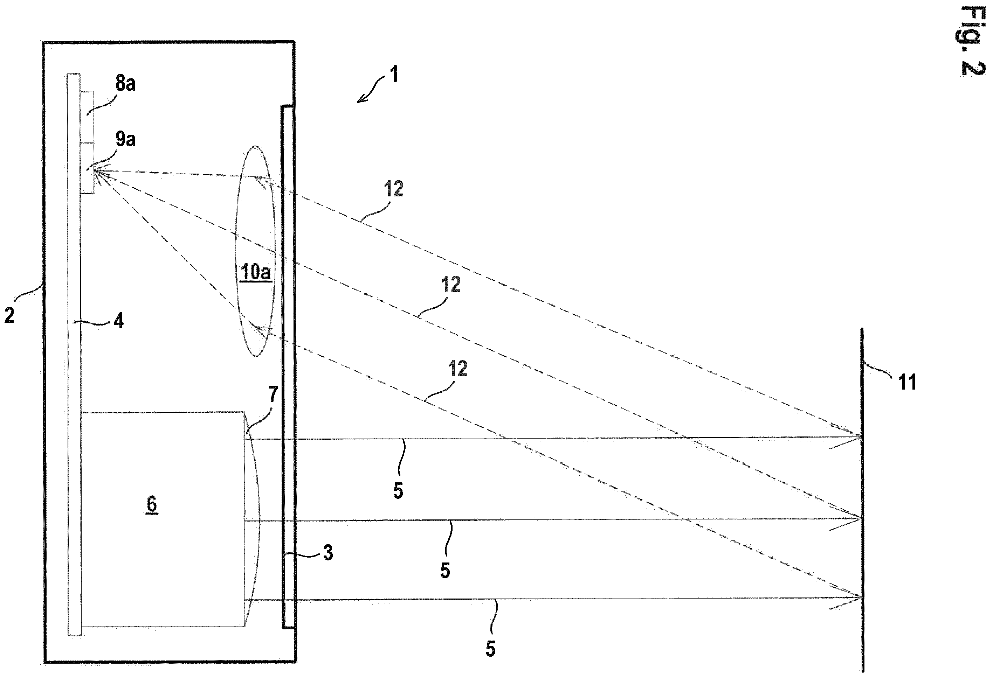

Die Figuren 1 und 2 zeigen einen optischen Triangulationstaster 1 gemäß dem Stand der Technik. Die Komponenten des optischen Triangulationstasters 1 sind in einem Gehäuse 2 mit lichtundurchlässigen Wänden integriert. In der Frontwand des Gehäuses 2 befindet sich eine lichtdurchlässige Frontscheibe 3.

Im Gehäuse 2 ist ortsfest eine Leiterplatte 4 angeordnet. Auf der Leiterplatte 4 ist ein Sendelichtstrahlen 5 emittierender Sender 6 montiert, dem eine Strahlformungsoptik 7 nachgeordnet ist. Auf der Leiterplatte 4 ist weiterhin eine Empfängeranordnung mit zwei Empfangselementen 8a, 9a angeordnet. Die Empfangselemente 8a, 9a bilden eine Doppeldiode aus, die auf einem Halbleitersubstrat angeordnet ist. Die Empfangselemente 8a, 9a schließen nahezu lückenlos aneinander an.

Die Empfängeranordnung bildet eine Triangulationsanordnung derart, dass die Empfangselemente 8a, 9a in einer quer zur Strahlachse der Sendelichtstrahlen 5 verlaufenden Triangulationsrichtung nebeneinander und in Abstand zum Sender 6 angeordnet sind.

Auf der Leiterplatte 4 oder einer weiteren Leiterplatte sind Komponenten einer Steuer- und Auswerteeinheit integriert. Die Steuer- und Auswerteeinheit dient zur Ansteuerung des Senders 6 und der Empfangselemente 8a, 9a. Zudem werden in der Steuer- und Auswerteeinheit Empfangssignale der Empfangselemente 8a, 9a zur Generierung eines Objektfeststellungssignals ausgewertet.

Der Empfängeranordnung ist eine Empfangsoptik 10a in Form einer Linse zugeordnet.

Zur Detektion eines Objekts 11 in einem Überwachungsbereich strahlt der Sender 6 Sendelichtstrahlen 5 ab, die durch die Frontscheibe 3 in den Überwachungsbereich geführt werden. An dem Objekt 11 werden die Sendelichtstrahlen 5 diffus reflektiert und werden als Empfangslichtstrahlen 12 zurück zum optischen Triangulationstaster 1 geführt.

Dabei werden die Empfangslichtstrahlen 12 durch die Frontscheibe 3 geführt und mittels der Linse auf die Empfängerebene der Empfangselemente 8a, 9a geführt.

Bei einer geringen Objektdistanz treffen die mit der Empfangsoptik 10a fokussierten Empfangslichtstrahlen 12 vorwiegend auf das ein Nahelement bildende Empfangselement 8a (Figur 1). Bei einer großen Objektdistanz treffen die Empfangslichtstrahlen 12 vorwiegend auf das ein Fernelement bildende Empfangselement 9a (Figur 2).

In der Auswerteeinheit wird die Differenz der Empfangssignale des Nah- und Fernelements gebildet. Die Abhängigkeit des so gebildeten Differenzsignals D in Abhängigkeit vom Objektabstand z zeigt Figur 3. Dabei zeigt Figur 3 das Differenzsignal D für die Detektion eines Objekts 11 mit hoher Remission (Kurve a) und für eine Detektion eines Objekts 11 mit geringer Remission (Kurve b).

Zur Generierung des Objektfeststellungssignals wird in der Auswerteeinheit das Differenzsignal D mit einem eine Schaltschwelle bildenden Schwellwert thr bewertet. Durch die Position des Nulldurchgangs des Differenzsignals D und den Schwellwert thr wird eine Tastweite (Detektionsabstand) definiert, die einen Tastbereich (Detektionsbereich) begrenzt.

Ergibt die Schwellwertbewertung einen Wert des Differenzsignals D größer als thr gilt das Objekt 11 innerhalb des Tastbereichs als erkannt. Werte des Differenzsignals D unterhalb des Schwellwerts thr werden als Hintergrundsignale ausgeblendet, d.h. mit dem optischen Triangulationstaster 1 erfolgt eine Hintergrundausblendung.

Da die Signalverläufe des Differenzsignals D bei Objekten 11 mit unterschiedlichen Remissionen unterschiedlich sind erreichen die Differenzsignale D den Schwellwert thr bei unterschiedlichen Objektabständen, d.h. es liegt ein Schwarz-Weiss-Fehler bei der Objektdetektion vor (in Figur 3 mit e bezeichnet).

Eine Einstellung der Tastweite ist durch eine Änderung der Triangulationsbedingungen möglich, durch die sich der Objektabstand, bei dem der Nulldurchgang des Differenzsignals D erfolgt, verschiebt. Dies ist vorteilhaft durch eine mechanische Verschiebung der Position von Empfangsoptik oder Empfängeranordnung in Triangulationsrichtung möglich.

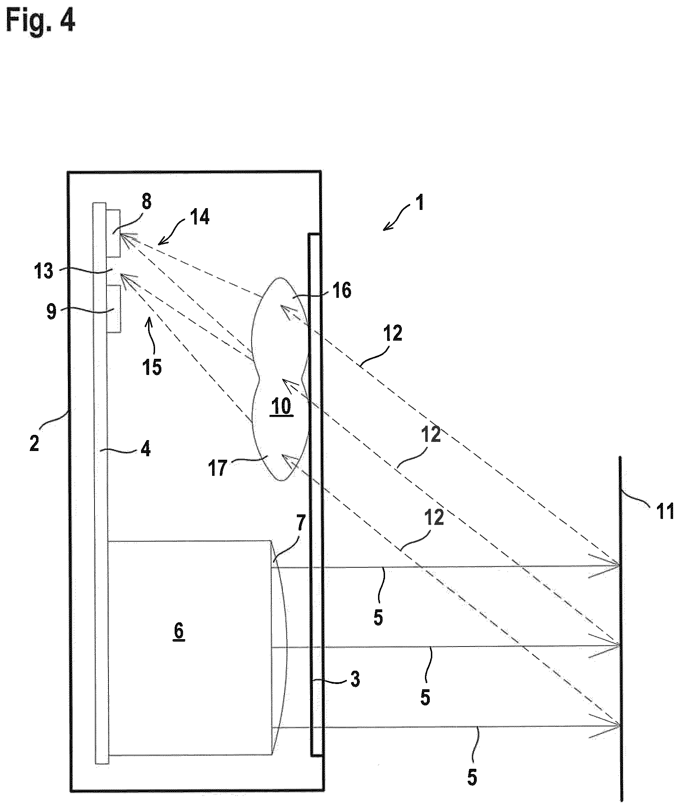

Figur 4 zeigt ein erstes Ausführungsbeispiel des erfindungsgemäßen optischen Triangulationstasters 1. Dieser erfindungsgemäße optische Triangulationstaster 1 unterscheidet sich hinsichtlich der Ausbildung der Empfängeranordnung und der Empfangsoptik 10 von dem aus dem Stand der Technik bekannten optischen Triangulationstaster 1 der Figuren 1 und 2.

Der optische Triangulationstaster 1 gemäß Figur 4 weist eine Empfängeranordnung mit zwei Empfängern 8, 9 auf, die so auf der Leiterplatte 4 montiert sind, dass eine definierte Lücke 13 zwischen diesen vorhanden ist.

Die Empfänger 8, 9 sind in Form von Fotodioden ausgebildet, d.h. im Gegensatz zu den Empfangselementen 8a, 9a des optischen Triangulationstasters 1 gemäß den Figuren 1 und 2 bestehen die Empfänger 8, 9 des erfindungsgemäßen optischen Triangulationstasters 1 aus kostengünstigen Standard-Bauteilen. Vorteilhaft werden die Empfänger 8, 9 mittels eines SMD-Prozesses auf der Leiterplatte 4 bestückt.

Weiterhin ist die erfindungsgemäße Empfangsoptik 10 so ausgebildet, dass diese die Empfangslichtstrahlen 12 in zwei Empfangslichtbündel 14, 15 aufspaltet.

Der Abstand der Empfangslichtbündel 14, 15 ist an die Größe der Lücke 13 angepasst. Vorteilhaft entspricht der Abstand der Empfangslichtbündel 14, 15 in der Empfängerebene der Empfängeranordnung zumindest näherungsweise der Größe der Lücke 13. Damit ist gewährleistet, dass unabhängig vom Objektabstand z immer wenigstens ein Empfangslichtbündel 14, 15 auf wenigstens einen Empfänger 8, 9 trifft, so dass für beliebige Objektabstände eine sichere Objektdetektion gewährleistet ist.

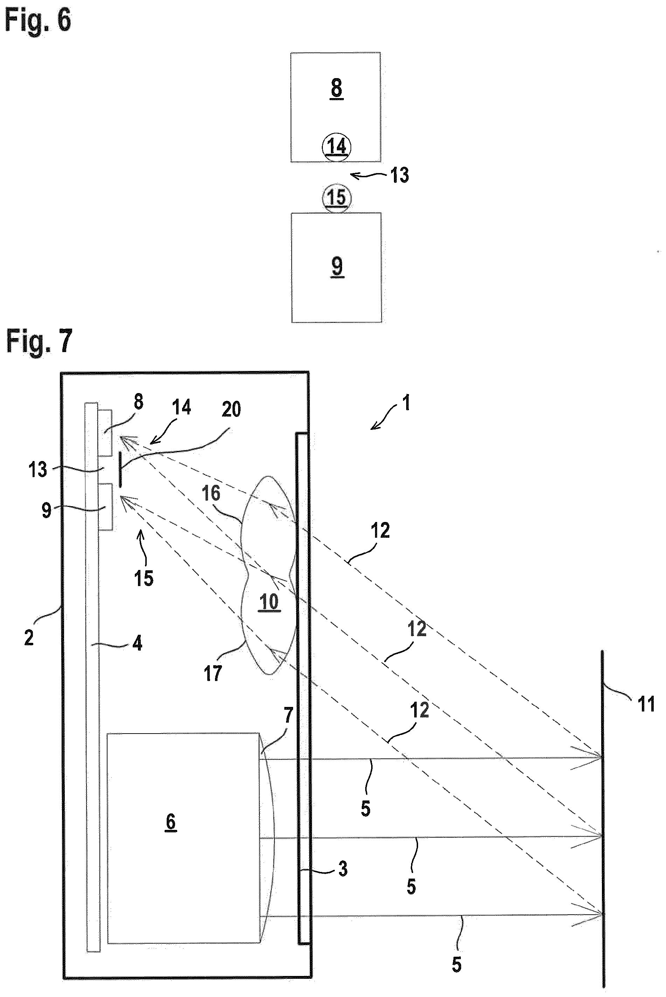

Dies ist in Figur 6 veranschaulicht, welche die Draufsicht auf die lichtempfindlichen Flächen der Empfänger 8, 9 mit den Lichtflecken der Empfangslichtstrahlen 12 zeigt. Wie Figur 6 zeigt, sind die Lichtflecke der Empfangslichtstrahlen 12 kleiner als die lichtempfindlichen Flächen der Empfänger 8, 9. Dies ist eine wesentliche Voraussetzung für eine fehlerfreie sichere Objektdetektion.

Insbesondere wird dadurch das Schaltverhalten des optischen Triangulationstasters 1 verbessert.

Die Differenzsignale D werden zur Generierung des Objektfeststellungssignals wieder mit dem Schwellwert thr bewertet. Durch die erfindungsgemäße Empfängeranordnung in Kombination mit der erfindungsgemäßen Empfangsoptik 10 wird im oberen Grenzbereich der Tastweite ein steiler Verlauf der Distanzsignale D erhalten, wodurch sich ein vergleichbar geringer Schwarz-Weiss-Fehler e im Vergleich zu dem aus dem Stand der Technik bekannten optischen Triangulationstaster 1 (wie in Figur 3 veranschaulicht) ergibt.

Bei der Empfangsoptik 10 des optischen Triangulationstasters 1 gemäß Figur 4 erfolgt die Aufspaltung der Empfangslichtstrahlen 12 in zwei Empfangslichtbündel 14, 15 dadurch, dass diese Empfangsoptik 10 aus zwei Teillinsen 16, 17 besteht.

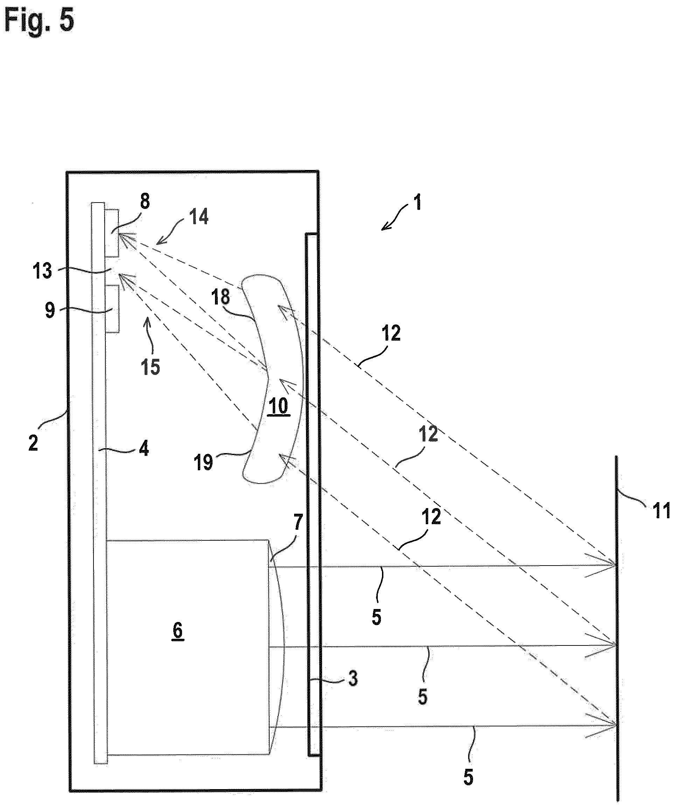

Figur 5 zeigt eine Variante der Ausführungsform gemäß Figur 4, wobei sich diese Ausführungsform nur hinsichtlich der Ausbildung der Empfangsoptik 10 unterscheidet. Bei der Empfangsoptik 10 gemäß Figur 5 erfolgt die Aufspaltung der Empfangslichtstrahlen 12 in die beiden Empfangslichtbündel 14, 15 dadurch, dass die Empfangsoptik 10 zwei geneigt zueinander verlaufende Lichtaustrittsflächen 18, 19 aufweist.

Figur 7 zeigt eine Weiterbildung der Ausführungsform gemäß Figur 4. Die Ausführungsform gemäß Figur 7 unterscheidet sich von der Ausführungsform gemäß Figur 4 nur dadurch, dass die Lücke 13 mit einer Blende 20 abgedeckt ist. Die Blende 20 deckt im vorliegenden Fall auch Randbereiche der Empfänger 8, 9 ab. Mit der Blende 20 kann die Größe des Lückenbereichs zwischen den Empfängern 8, 9 exakt vorgegeben werden, wobei mit der Blende 20 auch Montagetoleranzen der Montage der Empfänger 8, 9 auf der Leiterplatte 4 ausgeglichen werden können. Natürlich kann auch bei der Ausführungsform der Figur 5 eine Blende 20 vorgesehen sein.

### Bezugszeichenliste

- (1): Optischer Triangulationstaster
- (2): Gehäuse
- (3): Frontscheibe
- (4): Leiterplatte
- (5): Sendelichtstrahlen
- (6): Sender
- (7): Strahlformungsoptik
- (8): Empfänger
- (8a): Empfangselement
- (9): Empfänger
- (9a): Empfangselement
- (10): Empfangsoptik
- (10a): Empfangsoptik
- (11): Objekt
- (12): Empfangslichtstrahlen
- (13): Lücke
- (14): Empfangslichtbündel
- (15): Empfangslichtbündel
- (16): Teillinsen
- (17): Teillinsen
- (18): Lichtaustrittsfläche
- (19): Lichtaustrittsfläche
- (20): Blende

- (D): Differenzsignal
- (e): Schwarz-Weiss-Fehler
- (thr): Schwellwert
- (z): Objektabstand

## Patentansprüche

1. Optischer Triangulationstaster (1) zur Detektion von Objekten (11) in einem Überwachungsbereich mit einem Sendelichtstrahlen (5) emittierenden Sender (6), mit einer Empfängeranordnung mit mindestens zwei Empfängern (8, 9), die in einer Triangulationsrichtung in Abstand zum Sender (6) nebeneinander liegend angeordnet sind, wobei Sendelichtstrahlen (5) des Senders (6) an einem Objekt (11) im Überwachungsbereich reflektiert und als Empfangslichtstrahlen (12) zur Empfängeranordnung geführt sind und mit einer Steuer- und Auswerteeinheit, in welcher abhängig von der zumindest zwei Empfängersignalen der mindestens zwei Empfänger (8, 9) ein Objektfeststellungssignal welches eine Tastweite definiert, die einen Tastbereich begrentzt, generiert wird, **dadurch gekennzeichnet, dass** zwischen den Empfängern (8, 9) eine Lücke (13) vorhanden ist, und dass der Empfängeranordnung eine Empfangsoptik (10) vorgeordnet ist, mittels derer die Empfangslichtstrahlen (12) in zwei Empfangslichtbündel (14, 15) aufgeteilt sind, wobei der Abstand der Empfangslichtbündel (14, 15) an die Größe der Lücke (13) angepasst ist.

2. Optischer Triangulationstaster (1) nach Anspruch 1, **dadurch gekennzeichnet, dass** dessen Komponenten in einem Gehäuse (2) integriert sind, in welchem eine Leiterplatte (4) vorhanden ist, auf welcher die Empfänger (8, 9) der Empfängeranordnung angeordnet sind.

3. Optischer Triangulationstaster (1) nach einem der Ansprüche 1 oder 2, **dadurch gekennzeichnet, dass** die Empfänger (8, 9) der Empfängeranordnung von Fotodioden gebildet sind.

4. Optischer Triangulationstaster (1) nach einem der Ansprüche 2 oder 3, **dadurch gekennzeichnet, dass** die Empfänger (8, 9) mittels eines SMD-Prozesses auf der Leiterplatte (4) bestückt werden.

5. Optischer Triangulationstaster (1) nach einem der Ansprüche 2 bis 4, **dadurch gekennzeichnet, dass** der Sender (6) auf der Leiterplatte (4) angeordnet ist.

6. Optischer Triangulationstaster (1) nach einem der Ansprüche 1 bis 5, **dadurch gekennzeichnet, dass** im Bereich der Lücke (13) zwischen den Empfängern (8, 9) eine Blende (20) vorhanden ist.

7. Optischer Triangulationstaster (1) nach Anspruch 6, **dadurch gekennzeichnet, dass** die Blende (20) Randbereiche der Empfänger (8, 9) abdeckt.

8. Optischer Triangulationstaster (1) nach einem der Ansprüche 1 bis 7, **dadurch gekennzeichnet, dass** die Empfangsoptik (10) zwei Teillinsen (16, 17) mit unterschiedlichen optischen Achsen aufweist.

9. Optischer Triangulationstaster (1) nach einem der Ansprüche 1 bis 7, **dadurch gekennzeichnet, dass** die Empfangsoptik (10) gegeneinander verkippte optische Flächen aufweist.

10. Optischer Triangulationstaster (1) nach einem der Ansprüche 1 bis 7, **dadurch gekennzeichnet, dass** die Empfangsoptik (10) eine Anordnung von Mikrolinsen oder Mikroprismen aufweist.

11. Optischer Triangulationstaster (1) nach einem der Ansprüche 1 bis 7, **dadurch gekennzeichnet, dass** die Empfangsoptik (10) ein diffraktives Element ausbildet.

12. Optischer Triangulationstaster (1) nach einem der Ansprüche 1 bis 11, **dadurch gekennzeichnet, dass** der Abstand der Empfangslichtbündel (14, 15) am Ort der Empfängeranordnung zumindest näherungsweise der Größe der Lücke (13) entspricht.

13. Optischer Triangulationstaster (1) nach einem der Ansprüche 1 bis 12, **dadurch gekennzeichnet, dass** das Objektfeststellungssignal aus einem Verhältnis der Empfangssignale der Empfänger (8, 9) gebildet wird.

14. Optischer Triangulationstaster (1) nach Anspruch 13, **dadurch gekennzeichnet, dass** das Objektfeststellungssignal aus der Differenz der Empfangssignale der Empfänger (8, 9) gebildet wird.

15. Optischer Triangulationstaster (1) nach Anspruch 14, **dadurch gekennzeichnet, dass** die Differenz der Empfangssignale mit einem Schwellwert (thr) bewertet wird.

## Claims

1. An optical triangulation probe (1) for detecting objects (11) in a monitoring area with a transmitter (6) emitting transmitted light beams (5), with a receiver arrangement with at least two receivers (8, 9), which are arranged side by side in a triangulation direction at a distance from the transmitter (6), wherein transmitted light beams (5) of the transmitter (6) are reflected at an object (11) in the monitored area and are guided as received light beams (12) to the receiver arrangement, and with a control and evaluation unit, in which, depending on the at least two receiver signals of the at least two receivers (8, 9), an object detection signal is generated which defines a scanning range which limits a scanning range, **characterised in that** a gap (13) between the receivers (8, 9), and **in that** a receiving optical system (10) is arranged upstream of the receiver arrangement, by means of which the received light beams (12) are divided into two received light beams (14, 15), the spacing of the received light beams (14, 15) being adapted to the size of the gap (13).

2. An optical triangulation probe (1) according to claim 1, **characterised in that** its components are integrated in a housing (2) in which there is a printed circuit board (4) on which the receivers (8, 9) of the receiver arrangement are arranged.

3. An optical triangulation probe (1) according to one of claims 1 or 2, **characterised in that** the receivers (8, 9) of the receiver arrangement are formed by photodiodes.

4. An optical triangulation probe (1) according to one of claims 2 or 3, **characterised in that** the receivers (8, 9) are assembled on the printed circuit board (4) by means of an SMD process.

5. An optical triangulation probe (1) according to one of claims 2 to 4, **characterised in that** the transmitter (6) is arranged on the printed circuit board (4).

6. An optical triangulation probe (1) according to one of claims 1 to 5, **characterised in that** a diaphragm (20) is present in the region of the gap (13) between the receivers (8, 9).

7. An optical triangulation probe (1) according to claim 6, **characterised in that** the diaphragm (20) covers edge regions of the receivers (8, 9).

8. An optical triangulation probe (1) according to one of claims 1 to 7, **characterised in that** the receiving optics (10) has two partial lenses (16, 17) with different optical axes.

9. An optical triangulation probe (1) according to one of claims 1 to 7, **characterised in that** the receiving optics (10) have optical surfaces which are tilted relative to one another.

10. An optical triangulation probe (1) according to one of claims 1 to 7, **characterised in that** the receiving optics (10) has an arrangement of microlenses or microprisms.

11. An optical triangulation probe (1) according to one of claims 1 to 7, **characterised in that** the receiving optics (10) form a diffractive element.

12. An optical triangulation probe (1) according to one of claims 1 to 11, **characterised in that** the spacing of the receiving light beams (14, 15) at the location of the receiver arrangement corresponds at least approximately to the size of the gap (13).

13. An optical triangulation probe (1) according to one of claims 1 to 12, **characterised in that** the object detection signal is formed from a ratio of the received signals of the receivers (8, 9).

14. An optical triangulation probe (1) according to claim 13, **characterised in that** the object detection signal is formed from the difference between the received signals of the receivers (8, 9).

15. An optical triangulation probe (1) according to claim 14, **characterised in that** the difference between the received signals is evaluated with a threshold value (thr).

## Revendications

1. Palpeur optique de triangulation(1) pour la détection d'objets (11) dans une zone de surveillance avec un émetteur (6) émettant des faisceaux lumineux transmis (5), avec un dispositif de réception avec au moins deux récepteurs (8, 9), qui sont disposés côte à côte dans une direction de triangulation à une certaine distance de l'émetteur (6), dans lequel les faisceaux lumineux transmis (5) de l'émetteur (6) sont réfléchis sur un objet (11) dans la zone surveillée et sont guidés en tant que faisceaux lumineux reçus (12) vers le dispositif de réception, et avec une unité de commande et d'évaluation, dans laquelle un signal de détection d'objet est généré en fonction desdits au moins deux signaux de réception desdits au moins deux récepteurs (8, 9), qui définit une zone de balayage qui limite une zone de balayage, **caractérisée par** un espace (13) entre les récepteurs (8, 9), et par un système optique de réception (10) disposé en amont de l'agencement récepteur, au moyen duquel les faisceaux lumineux reçus (12) sont divisés en deux faisceaux lumineux reçus (14, 15), l'espacement des faisceaux lumineux reçus (14, 15) étant adapté à la taille de l'espacement (13).

2. Palpeur optique de triangulation (1) selon la revendication 1, **caractérisé par le fait que** ses composants sont intégrés dans un boîtier (2) dans lequel se trouve une carte de circuit imprimé (4) sur laquelle sont disposés les récepteurs (8, 9) de l'agencement des récepteurs.

3. Palpeur optique de triangulation (1) selon l'une des revendications 1 ou 2, **caractérisé par le fait que** les récepteurs (8, 9) de l'agencement des récepteurs sont constitués de photodiodes.

4. Palpeur optique de triangulation (1) selon l'une des revendications 2 ou 3, **caractérisé par le fait que** les récepteurs (8, 9) sont assemblés sur la carte de circuit imprimé (4) au moyen d'un procédé SMD.

5. Palpeur optique de triangulation (1) selon l'une des revendications 2 à 4, **caractérisé par le fait que** l'émetteur (6) est disposé sur la carte de circuit imprimé (4).

6. Palpeur optique de triangulation (1) selon l'une des revendications 1 à 5, **caractérisé par** la présence d'un diaphragme (20) dans la zone de l'espace (13) entre les récepteurs (8, 9).

7. Palpeur optique de triangulation (1) selon la revendication 6, **caractérisé par le fait que** le diaphragme (20) couvre les zones de bord des récepteurs (8, 9).

8. Palpeur optique de triangulation (1) selon l'une des revendications 1 à 7, **caractérisé par le fait que** l'optique de réception (10) comporte deux lentilles partielles (16, 17) ayant des axes optiques différents.

9. Palpeur optique de triangulation (1) selon l'une des revendications 1 à 7, **caractérisé par le fait que** les optiques de réception (10) ont des surfaces optiques inclinées l'une par rapport à l'autre.

10. Palpeur optique de triangulation (1) selon l'une des revendications 1 à 7, **caractérisé par le fait que** l'optique de réception (10) est constituée de microlentilles ou de microprismes.

11. Scanner de triangulation optique (1) selon l'une des revendications 1 à 7, **caractérisé par le fait que** l'optique de réception (10) forme un élément diffractif.

12. Palpeur optique de triangulation (1) selon l'une des revendications 1 à 11, **caractérisé par le fait que** l'espacement des faisceaux lumineux de réception (14, 15) à l'emplacement du dispositif récepteur correspond au moins approximativement à la taille de l'espace (13).

13. Palpeur optique de triangulation (1) selon l'une des revendications 1 à 12, **caractérisé par le fait que** le signal de détection d'objet est formé par un rapport des signaux reçus des récepteurs (8, 9).

14. Palpeur optique de triangulation (1) selon la revendication 13, **caractérisé par le fait que** le signal de détection d'objet est formé à partir de la différence entre les signaux reçus des récepteurs (8, 9).

15. Palpeur optique de triangulation (1) selon la revendication 14, **caractérisé par le fait que** la différence entre les signaux reçus est évaluée à l'aide d'une valeur seuil (thr).
